**Europäisches Patentamt**

**European Patent Office**

**Office européen des brevets**

(19)

(11) Publication number : **0 492 362 B1**

## EUROPEAN PATENT SPECIFICATION

(12)

(45) Date of publication of patent specification :
03.05.95 Bulletin 95/18

(51) Int. Cl.$^6$ : **H05B 33/08**

(21) Application number : **91121590.3**

(22) Date of filing : **17.12.91**

(54) **Driving circuit for electroluminescent element.**

(30) Priority : **28.12.90 JP 408861/90**

(43) Date of publication of application :
**01.07.92 Bulletin 92/27**

(45) Publication of the grant of the patent :
**03.05.95 Bulletin 95/18**

(84) Designated Contracting States :
**DE FR GB IT**

(56) References cited :
**US-A- 3 833 833**
**US-A- 4 443 741**
**US-A- 4 982 314**
**PATENT ABSTRACTS OF JAPAN vol. 13, no.
280 (E-779)(3628) 27 June 1989**

(73) Proprietor : **Stanley Electric Co., Ltd.
9-13, Nakameguro 2-chome
Meguro-ku Tokyo 153 (JP)**

(72) Inventor : **Mochizuki, Shigehiro
2-A, 1520-100 Kitahassaku-cho,
Midori-ku
Yokohama-shi, Kanagawa-ken (JP)**
Inventor : **Mori, Kiju
6-7-307 Yamazaki Danchi,
2130 Yamazaki-cho
Machida-shi, Tokyo (JP)**
Inventor : **Kondo, Fumio
10-503, 2570-2, Miho-cho,
Midori-ku
Yokohama-shi, Kanagawa-ken (JP)**

(74) Representative : **Weiss, Peter, Dr. rer.nat.
Dr. Peter Weiss & Partner
Postfach 12 50
D-78229 Engen (DE)**

## Description

## Background of the Invention

The present invention relates to a driving circuit for driving one or more electroluminescent elements (hereinafter referred to EL element) comprising a generator and a coil connected in series between an output of said generator and an electroluminescent element (EL). Such a driving circuit is known from JP-A-2244593.

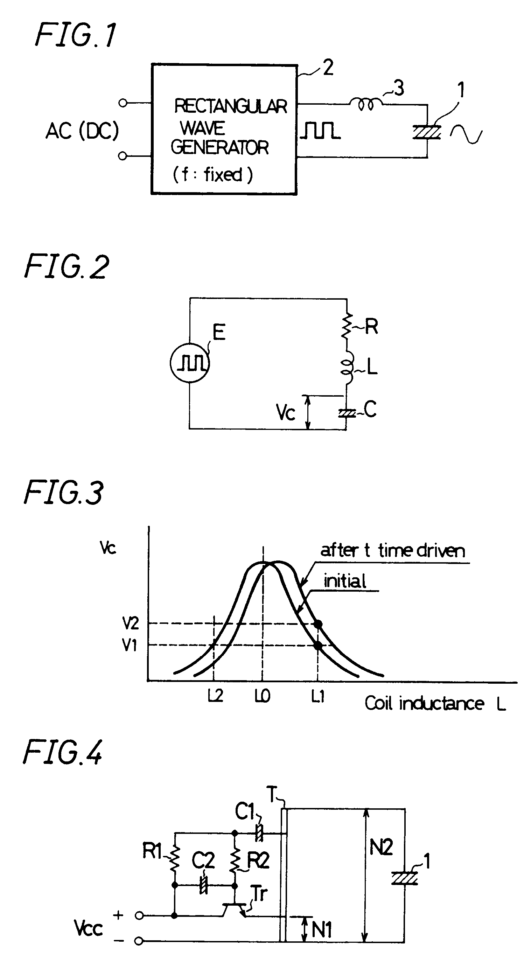

In a conventional EL element driving circuit shown in FIG. 4, a direct current (dc) input voltages Vcc is applied to the primary winding of tranformer T via switching operation by means of transistor Tr, then converted to ac voltage and to a higher voltage, and applied to EL element 1. The secondary side of transformer T is formed as a resonant circuit which consists of the inductance of secondary winding N2 and capacitance of EL element 1. The voltage and frequency to be applied to EL element 1 is decided by the capacitance of EL element 1. In FIG. 4, R1 and R2 are resistors, and C1 and C2 are capacitors.

EL element 1 mentioned above is a capacitive load, on the basis of which capacitance the transformer T must be designed. More specifically, such design should be performed in accordance with each emission area of EL elements 1. Such an independently performed design is inevitable, or it becomes impossible to be driven by a same voltage and frequency. Also, the impedance of EL element 1 can increase according to its change with time duration, and accordingly the voltage and frequency applied thereto are necessarily increased.

Disadvantages of the conventional driving circuits include: the transformer must be designed in accordance with capacitance component of EL element 1 as a load, which sustains minimalization of the device; and an increased driving frequency will lower the impedance to increase power consumption, which can increase degradation of EL element.

The US-A 4 443 741 shows a drive circuit for an electroluminescent element whose brightness can be changed by changing a voltage or the frequency of the voltage applied to the electroluminescent element and can be kept constant by keeping the current flowing through the electromuminescent element constant. The drive circuit provides that the output voltage of the output frequency is variable. The reference includes a detector to detect the current flowing through electroluminescent element. The output of the detector varies the output voltage and the output frequency, whereby the current flowing through electroluminescent element is kept constant and then the brightness of electroluminescent element is kept constant.

The JP-A 2 244 593 shows a circuit to drive electroluminescent element and a reactor to connect in series with electroluminescent element. The capacity of the electroluminescent element and the inductance of the reactor form the resonant circuit. The reference optains the compensation of capacity decrease from to connect the voltage limiting element and to lower Q-value of the resonant circuit by the capacity of the electroluminescent element and the inductance of the reactor.

## Summary of the Invention

In view of disadvantages mentioned above, an object of the present invention is to provide an EL element driving circuit capable of being designed in a small size and having a long life.

In order to solve these problems said generator is a rectangular waveform generator for generating a rectangular waveform voltage of a fixed frequency, and said coil is designed to have value of inductance greater than that exhibiting at its resonant condition.

In the EL element driving circuit of the invention, since the inductance of coil 3 is set up in an appropriate value, a voltage of a fixed frequency is applied to the EL element. Also, since the inductance of coil 3 is designed greater than that of its resonant condition, the terminal voltage of EL element 1 increases as the capacitance of EL element reduces due to change with time duration.

## Brief Description of the Drawings

FIG.1 is a schematic diagram representing an embodiment of the present invention;
FIG.2 is an equivalent circuit of the output face of the rectangular waveform generator 2;
FIG.3 is a characteristic diagram illustrating the relationship between terminal voltage Vc of EL element 1 and inductance L of coil 3;
and FIG.4 is a schematic diagramm of a conventional driving circuit.

## Detailed Description of preferred Embodiments

FIG.1 shows a driving circuit for an EL element according to the present invention, including an EL element 1 as a load, a rectangular waveform generator 2 which is applied with an ac or dc input for generating a rectangular waveform voltage of a fixed frequency f, and a coil 3, which is designed to have an inductance value larger than that at its resonant frequency and connected in seires between an output of generator 2 and EL element 1.

In operation, rectangular waveform generator 2 produces a voltage of a fixed frequency f which is independent from EL element 1 as a load. If, at the output side of generator 2, the coil 3 is designed to have a suitable inductance value, then a driving voltage of a fixed frequency having approximately a rectangular waveform is applied to EL element 1. Hence, EL element 1 is enabled to illuminate stably.

FIG.2 shows an equivalent circuit of the output face of the rectangular waveform generator 2. The output side of the waveform generator 2, in view of an applied rectangular waveform output voltage E of a fixed frequency, may be deemed as a RCL series circuit comprising a resistance R of resistor, an inductance L of the coil and a capacitance C of the capacitor. Thus, a terminal voltage Vc of EL element 1 at a resonant condition is:

$$Vc \ = \ Q\,E \ (\text{where } Q \ = \ \frac{\sqrt{L/C}}{R}\,),$$

which is applied on EL element 1. By appropriately establishing the level of produced rectangular voltage E and the inductance of coil 3, an approximately sinusoidal voltage of a predetermined level can be applied on EL element 1.

FIG.3 shows a characteristic diagram illustrating the relationship between terminal voltage Vc of EL element 1 and inductance L of coil 3. As shown, the Vc-L curve has a peak at the resonant point. An EL element 1 is characteristic in that the capacitance C thereof reduces in accodance with time duration. Accordingly, after operated for a time t under a fixed frequency, the resonant condition $L=1/\omega^2 C$ ($\omega$ : angular frequency) increases, so that the Vc-L curve is shifted to the right. In order to obtain a predetermined terminal voltage for EL element 1 in a fixed frequency condition, the inductance L of coil 3 is established in a value L1 which is greater than inductance L0 of resonant condition. Although the capacitance of the EL element 1 decreases due to time duration, the terminal voltage increases from V1 to the higher voltage V2. In contrast, when the inductance L of coil 3 is estabished in a value L2 lower than that at resonance, the terminal voltage Vc decreases.

As a result, although various conditions of EL element 1, such as its emission surface area, are varied, a predetermined approximately sinusoidal driving voltage preferrable for EL element 1 can be applied only by adjusting the inductance of output coil 3. Also, since the inductance of coil 3 is set up greater than its resonant value, no matter how EL element 1 is subjected to a change with time, the terminal voltage rises but the frequency remains constant, thereby it is enabled to provide a long life of EL element 1.

In contrast to the conventional EL element 1, it is never required to design a transformer independently for each element, thereby enabling a small size design of the rectangular waveform generator 2. Further, another arrangement is possible such that a plurality of series circuits each including a coil 3 and an EL element 1 are connected in parallel to each other. This enables to drive a plurality of EL elements 1 in the manner that each EL element 1 is driven by an independent voltage, and also on-off operation is independently performed.

As described above, the present invention provides the advantages that the transformer is not required to be designed separately for each EL element to enable a design of small dimension, and that, although the EL element is subjected to change with time duration, the terminal voltage increases but the frequency remains constant, thereby providing a long life of EL element 1.

## Claims

1. Driving circuit for one or more electroluminescent elements comprising a generator and a coil (3) connected in series between an output of said generator (2) and an electroluminescent element (EL),
characterized in that
said generator (2) is a rectangular waveform generator (2) for generating a rectangular waveform voltage of a fixed frequency, and said coil (3) is designed to have a value of inductance greater than an inductance which would lead to a resonant condition at said fixed frequency.

2. Driving circuit according to claim 1, wherein a plurality of series circuits each including a coil (3) and an EL element (1) are connected in parallel to each other.

## Patentansprüche

1. Steuerstromkreis für ein oder mehrere Elektrolumineszenzelement(e) mit einem Generator und einer Spule (3), die in Reihe zwischen einem Ausgang des Generators (2) und einem Elektrolumineszenzelement (EL) verbunden sind,
dadurch gekennzeichnet,
dass der Generator (2) ein Rechteckwellengenerator (2) ist, um eine rechteckförmige Wellenspannung mit einer bestimmten Frequenz zu erzeugen, und dass die Spule (3) so ausgelegt ist, dass sie einen höheren Wert der Induktivität als eine Induktivität aufweist, die bei der bestimmten Frequenz zu einem Resonanzfall führen würde.

2. Steuerstromkreis nach Anspruch 1, dadurch gekennzeichnet, dass eine Vielzahl von in Reihe angeordneten Stromkreisen parallel miteinander verbunden sind, wobei jeder eine Spule (3) und ein EL Element (1) beinhaltet.

## Revendications

1. Circuit de commande d'un ou plusieurs éléments électroluminescents, comprenant un générateur et une bobine (3) branchée en série entre une sortie du générateur (2) et un élément électroluminescent (EL), caractérisé en ce que le générateur (2) est un générateur de forme d'onde rectangulaire (2) destiné à générer une tension de forme d'onde rectangulaire à fréquence fixe, et la bobine (3) est conçue pour avoir une valeur d'inductance supérieure à une inductance qui conduirait à une condition de résonance à cette fréquence fixe.

2. Circuit de commande selon la revendication 1, caractérisé en ce qu'une pluralité de circuits série comprenant chacun une bobine (3) et un élément (EL1) sont branchés en parallèle les uns aux autres.

## FIG.1

RECTANGULAR
WAVE
GENERATOR
( f : fixed )

AC (DC)

## FIG.2

E

R

L

Vc

C

## FIG.3

Vc

after t time driven

initial

V2

V1

L2    L0    L1    Coil inductance  L

## FIG.4

C1

T

R1

C2

R2

N2

Tr

1

Vcc

N1